# EUROPÄISCHE PATENTSCHRIFT

(11) **EP 3 047 962 B1**
(45) Veröffentlichungstag und Bekanntmachung des Hinweises auf die Patenterteilung: **01.09.2021**
(21) Anmeldenummer: 16150709.0
(22) Anmeldetag: 11.01.2016
(51) Int. Cl.: B29C 65/18, B29C 65/74, B29C 65/00, B29C 65/26, B29L 31/00

(54) **VORRICHTUNG ZUM VERSIEGELN EINER VERPACKUNG ODER EINES VERPACKUNGSMATERIALS**
DEVICE FOR SEALING A PACKAGE OR A PACKAGING MATERIAL
DISPOSITIF DE SCELLAGE D'UN EMBALLAGE OU D'UN MATERIAU D'EMBALLAGE

(30) Priorität: 20.01.2015 DE 102015200781
(43) Veröffentlichungstag der Anmeldung: 27.07.2016
(73) Patentinhaber: Syntegon Packaging Solutions B.V., 6001 SE Weert (NL)
(72) Erfinder: Nievergeld, Hans, 6031 GB Nederweert (NL); Slenders, Peter, 6026EC Maarheeze (NL)
(74) Vertreter: Daub, Thomas

(56) Entgegenhaltungen:
- US-A- 4 582 555
- US-A1- 2002 177 380
- US-A1- 2009 038 273
- None

## Beschreibung

Die Erfindung geht aus von einer Vorrichtung zum Versiegeln einer Verpackung oder eines Verpackungsmaterials nach der Gattung der unabhängigen Ansprüche. Eine gattungsgemäße Vorrichtung ist beispielsweise aus der DE 199 04 154 A1 bekannt. Diese Vorrichtung zum Verschließen von aus einem heißsiegelfähigen Material hergestellten Verpackungen umfasst Siegelbacken, die durch eine Ausnehmung oder durch Schlitze in zwei Zonen unterteilt sind. Die beiden Zonen sind mittels eines Verbindungsstegs elastisch miteinander verbunden, so dass beim Siegeln einer Quernaht eine unterschiedliche Anzahl von Packstofflagen längs der Quernaht ausgeglichen werden können.

Aus der US 2002/0177380 A1 ist eine Vorrichtung zum Versiegeln einer Verpackung oder eines Verpackungsmaterials, mit zumindest einer Siegeleinrichtung, die zumindest zwei zueinander verfahrbare Siegelbacken umfasst zum Versiegeln des Verpackungsmaterials, bekannt. Die Vorrichtung umfasst eine Trennvorrichtung zum Trennen des Verpackungsmaterials, wobei die Trennvorrichtung mit zumindest einer Siegelbacke verbunden ist, wobei die Trennvorrichtung zumindest teilweise von einem weiteren Siegelelement umgeben ist, das mit einem Gegenhalter zur Siegelung des Verpackungsmaterials zusammenwirkt, wobei eine Siegelfläche des Siegelelements unmittelbar an die Trennvorrichtung heranreicht, so dass sich kein oder nahezu kein Spalt zwischen Siegelelement und Trennvorrichtung ausbildet.

Aus der US 2009/0038273 A1 ist ebenfalls eine Vorrichtung zum Versiegeln einer Verpackung oder eines Verpackungsmaterials bekannt.

Der Erfindung liegt die Aufgabe zugrunde, bei der Versiegelung eines Verpackungsmaterials und einem nachfolgenden Schneiden eine Aufspreizung der Randbereiche zu reduzieren. Diese Aufgabe wird gelöst durch die Merkmale des unabhängigen Anspruchs 1.

### Vorteile der Erfindung

Die erfindungsgemäße Vorrichtung zum Versiegeln einer Verpackung oder eines Verpackungsmaterials hat demgegenüber den Vorteil, dass auch die Randbereiche eines Beutels sicher versiegelt werden und zwei Beutel voneinander getrennt werden. Dieses ist erfindungsgemäß dadurch möglich, dass ein Siegelbackenpaar mit integrierter Schneidvorrichtung über ein weiteres, gekoppeltes Siegelelement verfügt. Dieses gekoppelte Siegelelement mit ggf. erforderlichem Gegenhalter reicht bis an den Randbereich der Schneidvorrichtung heran und stellt damit das Siegeln in unmittelbarer Nachbachschaft zu der Schneidvorrichtung sicher. Dadurch wird es möglich, dass der Siegelprozess und der Trennprozess parallel in einem Prozessschritt erfolgen. Durch die Siegelung des Randbereichs kann eine Spreizung des Randbereichs ausgeschlossen werden. Dies hat zur Folge, dass durch das an der Schneideinrichtung befestigte Siegelelement eine verstärkte und breitere Siegelnaht entsteht. Dies erhöht die Stabilität des Beutels und die Sicherheit vor Beutelundichtigkeit. Des weiteren wird die Optik des Randbereichs des produzierten Beutels wesentlich verbessert.

Erfindungsgemäß ist vorgesehen, dass das Siegelelement relativ beweglich ist zu der Siegelbacke, die mit der Trennvorrichtung verbunden ist. Damit wird sichergestellt, dass das Siegelelement zusammen mit der Trennvorrichtung zum Zeitpunkt des Trennens bewegt wird, wobei zusätzlich zum Trennvorgang auch noch das Siegeln des Randbereichs benachbart zur Trennvorrichtung zuverlässig vorgenommen wird. Auf eine weitere, separate Antriebsvorrichtung für das Siegelelement kann verzichtet werden, so dass sich der Aufbau weiter vereinfacht.

In einer zweckmäßigen Weiterbildung ist vorgesehen, dass die Siegelbereiche des Siegelelements, der gegen den Gegenhalter versiegelt, schräg verlaufen gegenüber den Siegelbereichen der Siegelbacken. Besonders bevorzugt ist eine gewisse Winkeldifferenz in der Kontaktfläche des Siegelelements und des Gegenhalters vorteilhaft, damit die Folienschmelze in eine Bewegungsrichtung versetzt wird, die dazu beiträgt, dass eine Verschmutzung der Trenneinrichtung vermindert wird. Die Folienschmelze wird somit wegbewegt von der Trenneinrichtung. Dies wird auch dadurch unterstützt, dass zusammenwirkende Siegelflächen von Siegelelement und Gegenhalter so ausgestaltet sind, dass mit zunehmendem Abstand von der Trennvorrichtung sich der Abstand der Siegelflächen von Siegelelement und Gegenhalter vergrößert. Beispielsweise liegt die Winkeldifferenz im Bereich von 1-10° insbesondere bei 5°. Der Winkel des Siegelelements liegt bevorzugt im Bereich von 34,5° - 39°, insbesondere bei 37°. Entsprechend liegt der Winkel des Gegenhalters bevorzugt im Bereich von 45,5° - 50°, insbesondere bei 48°. Mit diesen Werten konnte einerseits eine gute Siegelung wie auch ein zuverlässiges Abfließen der Folienschmelze erreicht werden.

In einer zweckmäßigen Weiterbildung ist vorgesehen, dass zumindest eine Siegelfläche des Siegelelements hin zum Trennelement ansteigt in einer Richtung quer zu einer Transportrichtung des Verpackungsmaterials. Damit wird gerade beim Ausfahren der Trennvorrichtung und des damit verbundenen Siegelelements das Verpackungsmaterial mitgenommen und gegen die Gegenflächen des Gegenhalters zur Siegelung gedrückt.

In einer zweckmäßigen Weiterbildung ist vorgesehen, dass das Siegelelement durch Konvektion erwärmt wird. Damit können die Heizelemente in den Siegelbacken verbleiben, während das bewegliche Siegelelement selbst nicht mit einem eigenen Heizelement versehen werden muss. Dies vereinfacht den Aufbau der Vorrichtung.

In einer zweckmäßigen Weiterbildung ist vorgesehen, dass ein Gegenhalter fest in einer Siegelbacke montiert ist. Damit vereinfacht sich der Aufbau weiter, da lediglich ein zur Siegelbacke relativ bewegliches Teil, nämlich das Siegelelement, vorgesehen werden muss, welches mit dem Gegenhalter zum Siegeln zusammenwirkt.

In einer zweckmäßigen Weiterbildung ist vorgesehen, dass Quersiegelbacken zusammen mit dem Siegelelement während des Siegelns in einer Bewegungsrichtung parallel zu der Vorzugsrichtung des Verpackungsmaterials bewegt werden. Damit wird sichergestellt, dass eine kontinuierliche Arbeitsweise der Maschine erfolgen kann. Dies trägt zu schnellen Bearbeitungsvorgängen bei.

Weitere zweckmäßige Weiterbildungen ergeben sich aus weiteren abhängigen Ansprüchen und der Beschreibung.

### Zeichnung

Ein Ausführungsbeispiel der erfindungsgemäßen Vorrichtung zum Versiegeln einer Verpackung oder eines Verpackungsmaterials ist in der Zeichnung dargestellt und wird nachfolgend näher erläutert. Es zeigen:
Die Figur 1 eine perspektivische Ansicht der gesamten Vorrichtung,
die Figur 2 eine perspektivische Ansicht eines Ausschnitts der Quersiegeleinheit inklusive der Siegelbacken,
die Figur 3 eine Seitenansicht bzw. Schnitt der Siegelbacken im geöffneten Zustand,
die Figur 4 eine Seitenansicht bzw. Schnitt der Siegelbacken im geschlossenen Zustand mit ausgefahrener Trennvorrichtung sowie
die Figur 5 schematische Ansichten der Siegelnaht nach dem Stand der Technik rechts sowie eine Siegelnaht, die mit der erfindungsgemäßen Vorrichtung erzeugt wurde, links.

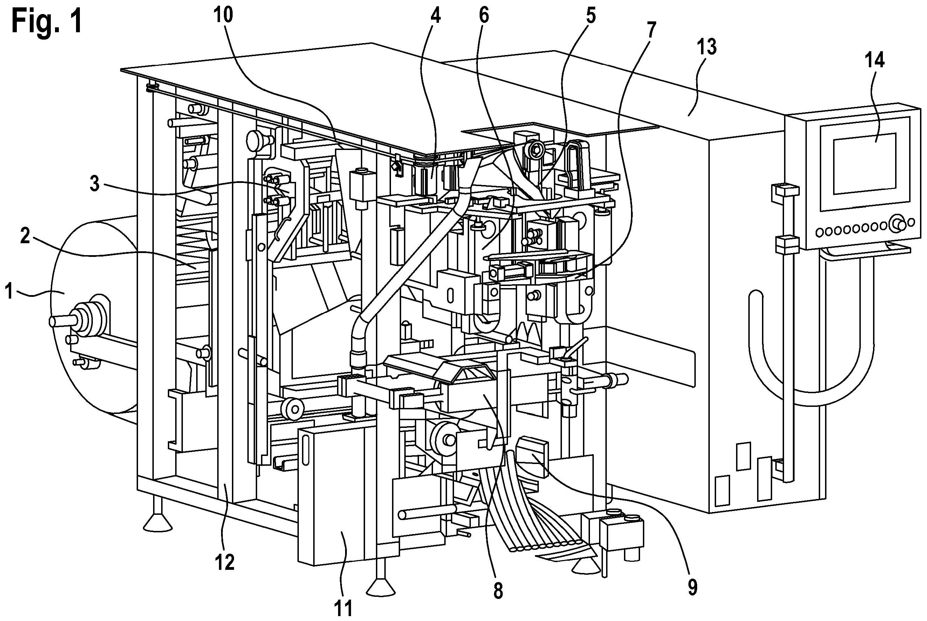

In Figur 1 ist eine Form-, Füll- und Verschließmaschine für Schlauchbeutel gezeigt. Hierbei wird beispielsweise eine Folie 1 als Verpackungsmaterial in Form einer Rolle angeliefert. Die auf einer Rolle aufgewickelte Folie 1 wird durch ein Tänzersystem 2 abgewickelt und auf konstante Bahnkraft gehalten. Die Folie 1 wird durch einen Formatsatz 5, wie beispielswiese eine Formschulter, zu einem Beutel 9 geformt. Ein am Formatsatz 5 angeordnetes Abzugselement 6 sorgt für eine geregelte Bahngeschwindigkeit im Beutelformprozess. Das Abzugselement 6 bewegt die Folie 1 bzw. den Folienschlauch in vertikaler Richtung nach unten. Der Verschluss der Längsnaht des Beutels 9 wird von einer Längssiegeleinrichtung 7 vorgenommen. Die Längssiegeleinrichtung 7 siegelt Nähte längs zur Transportrichtung der Folie 1. Anschließend wird der Beutel 9 durch eine Quersiegeleinheit 8 aus der zu einem Schlauch geformten Folie 1 gesiegelt und zugleich durch in die Siegelbacken 17, 18 integrierte Trennvorrichtung 26 getrennt. Unten verschlossene Beutel 9 werden mit einem Produkt gefüllt und im nachfolgenden Prozessschritt durch die Quersiegeleinheit 8 vollständig verschlossen. Die Quersiegeleinheit 8 siegelt Nähte quer zur Transportrichtung der Folie 1. Die genannten Elemente sind in einem Maschinenrahmen 12 montiert und werden über eine Steuerungseinheit 14 gesteuert, welche auf Steuerungseinheiten im Schaltschrank 13 zurückgreift.

Alternativ können auf einer solchen Vorrichtung auch Beutel 9 hergestellt werden, die durch einen sogenannten Zip-Verschluss 10 geöffnet und verschlossen werden können. Dieser Zip-Verschluss 10 wird über eine Zuführeinheit 4 an geeigneter Stelle zugeführt und zur Optimierung der Nahtqualität mit einer Ausstanzung an dem Zip-Verschluss 10 versehen. Die Reste der Ausstanzung werden durch eine Auffangeinheit 11 gesammelt. Ein Kantensiegelmodul 3 siegelt die Kanten des Beutels 9 zur Verstärkung und Stabilität des Beutels 9. Das Kantensiegelmodul 3 ist in dem Ausführungsbeispiel zwischen dem Tänzersystem 2 und dem Formatsatz 5 angeordnet.

Aufgrund der kontinuierlichen Arbeitsweise der Schlauchbeutelmaschine sind ein Vertikalantrieb 15 und ein Horizontalantrieb 16 für die Quersiegeleinheit 8 separat ausgeführt. Optional kann es notwendig sein, zur Erstellung von sogenannter DOY ZIP Style-Beuteln 9 noch Eurolöcher in den Beutelkopf einzubringen. Dies könnte beispielsweise durch eine entsprechende Stanzeinheit 19 realisiert werden.

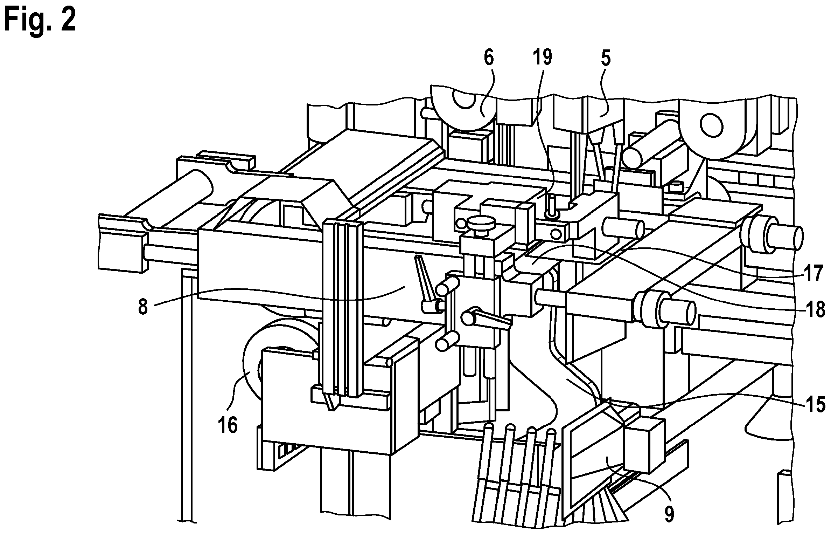

Die in Figur 1 gezeigten Elemente sind in Figur 2 vergrößert dargestellt, um die Siegeleinheit, vorzugsweise die Quersiegeleinheit 8, näher hervorzuheben.

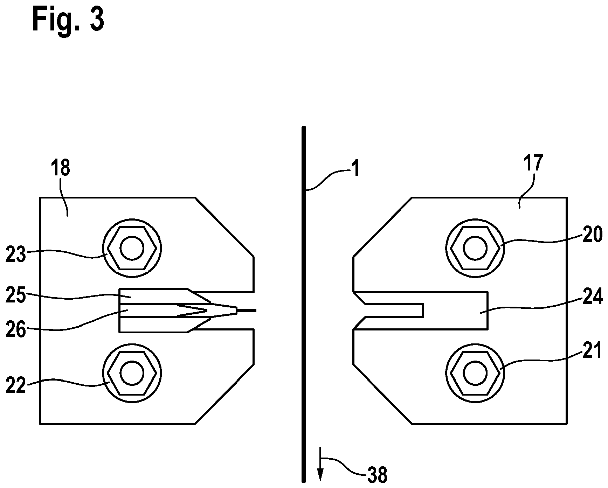

Gemäß Figur 3 stehen sich zwei im wesentlichen im Querschnitt bzw. in der Seitenansicht U-förmig ausgebildete Siegelbacken 17, 18 vorzugsweise der Quersiegeleinheit 8 gegenüber. Dazwischen läuft die zu siegelnde Folie 1, die zur Erstellung eines Beutels 9 durch den Formatsatz 5 zu einem Folienschlauch geformt wurde. Die Folie 1 wird entlang einer Transportrichtung 38 wie mit einem Pfeil angedeutet durch die Abzugselemente 6 bewegt. In Figur 3 sind die Siegelbacken 17, 18 geöffnet. In einer der Siegelbacken 18 sind in einer Ausnehmung eine Trennvorrichtung 26 und zumindest ein weiteres Siegelelement 25 angeordnet. Die Trennvorrichtung 26 ist relativ zu den Siegelbacken 16, 17 beweglich ausgebildet. Die Trennvorrichtung 26 wird umgeben von dem Siegelelement 25. Dabei reicht die Siegelfläche des Siegelelements 25 unmittelbar an die Trennvorrichtung 26 heran, so dass sich kein oder nahezu kein Spalt zwischen Siegelelement 25 und Trennvorrichtung 26 ausbildet. Die andere Seite der Siegelfläche des Siegelelements 25 schließt im ausgefahrenen Zustand bündig ab mit der Siegelfläche der Siegelbacke 18. Das Siegelelement 25 ist beiderseits symmetrisch um die Trennvorrichtung 26 angeordnet, wobei die Spitze der Trennvorrichtung 26 die Symmetrieachse des Siegelelements 25 bildet. Auch ein nicht-symmetrischer Aufbau des Siegelelements 25 ist denkbar.

Die Siegelflächen des Siegelelements 25 sind bezogen auf die Folie 1 bzw. die Oberfläche der Siegelbacken 17, 18, die sich zum Siegeln der Folie 1 berühren, schräg bzw. mit einem gewissen Winkel 40 ausgebildet. Der Winkel 40 liegt im Bereich zwischen 0 und 90°, bevorzugt in einem Bereich zwischen 34° und 39°, besonders bevorzugt um 37°. Die Siegelflächen des Siegelelements 25 laufen von außen ansteigend auf das Trennelement 26 zu. Das Trennelement 26 wiederum ragt quer zur Transportrichtung 38 hin zur Folie 1 bzw. der gegenüberliegenden Siegelbacke 17 weiter heraus als das Siegelelement 25. Im eingefahrenen Zustand der Trennvorrichtung 26 erreicht deren Spitze in etwa die Siegelfläche der sie umgebenden Siegelbacke 18.

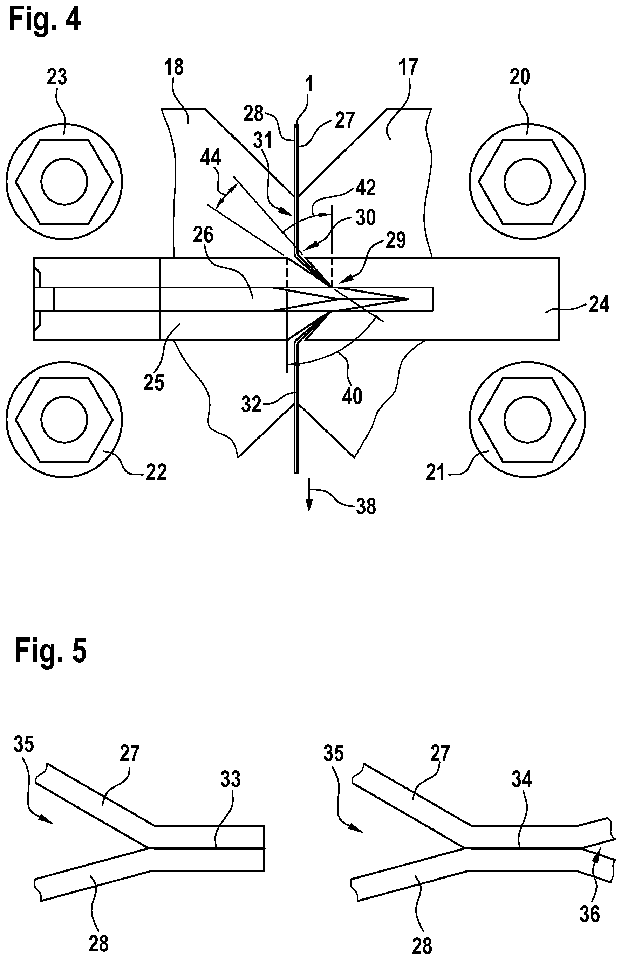

In der gegenüberliegenden Siegelbacke 17 ist ein Gegenhalter 24 integriert. Der Gegenhalter 24 weist in der Mitte zwischen den Gegenflächen eine Ausnehmung auf zur berührungsfreien Aufnahme der ausgefahrenen Trennvorrichtung 26 im geschlossenen Zustand der Siegelbacken 17, 18. In diesem Zustand hat die Trennvorrichtung 26, beispielsweise ein Messer, die Folie 1 bereits durchtrennt wie in Figur 4 ersichtlich. Die Gegenflächen des Gegenhalters 24 sind komplementär zu den Siegelflächen des Siegelelements 25 ausgeführt, so dass dazwischen die Folie 1 in einer für den Siegelvorgang geeigneten Weise zu liegen kommt. Die Siegelflächen des Gegenhalters 24 sind also ebenfalls schräg bzw. um einen Winkel 42 geneigt gegenüber der Folie 1 bzw. der Oberfläche der Siegelbacken 17, 18, ausgeführt und wirken mit den entsprechenden Siegelflächen des Siegelelements 25 zusammen. Der Gegenhalter 24 ist fest mit der Siegelbacke 17 verbunden. Die Gegenfläche des Gegenhalters 24 grenzt unmittelbar an die Siegelfläche der Siegelbacke 17 an, entfernt sich in einer ebenen Fläche mit einem gegenüber der Vertikalen bzw. der Transportrichtung 38 geneigten Winkel 42 von der Siegelfläche der Siegelbacke 17 und springt anschließend zur Bildung einer Aufnahme für die Trennvorrichtung 26 zurück. Die Ausgestaltung des Gegenhalters 24 ist entsprechend dem Siegelelement 25 symmetrisch ausgebildet und mittig in der Siegelbacke 17 angeordnet. Die Siegelbacken 17, 18 weisen zudem mehrere Heizelemente 20 bis 23 auf.

Befindet sich die Folie 1 in der Siegelposition zwischen den Siegelbacken 17, 18, werden die Siegelbacken 17, 18 geschlossen. Die Folie 1 wird in den Bereichen 31, 32 gesiegelt. Parallel oder nacheinander bewegt sich die Trennvorrichtung 26 zusammen mit dem Siegelelement 25 in Richtung der Folie 1. Die Folie 1 wird durch die Trennvorrichtung 26 und das Siegelelement 25 in die schräg ausgebildeten Gegenflächen des Gegenhalters 24 gedrückt und dort ebenfalls versiegelt. Zudem durchtrennt die Trennvorrichtung 26 die Folie 1.

Gemäß Figur 4 sind nun die Siegelbacken 17, 18 in geschlossenem Zustand gezeigt bei ausgefahrener Trennvorrichtung 26. Dabei ist ersichtlich, dass sich die beiden Siegelbacken 17, 18 im geschlossenen Zustand im Kontaktbereich 31, 32 zum Heißsiegeln der Folie 1 befinden. Die Siegelflächen der Siegelbacken 17, 18, die im geschlossenen Zustand in den Kontaktbereichen 31, 32 miteinander in Kontakt kommen, sind parallel zur Transportrichtung 38 der Folie 1 orientiert.

Außerdem ist die Trennvorrichtung 26 ausgefahren, so dass in diesem Bereich die Folie 1 bereits durchtrennt wurde. Dadurch entstehen im oberen Bereich die untere Quernaht des oberen Beutels 9 sowie im unteren Bereich die obere Quernaht des unteren Beutels 9. Im geschlossenen Zustand der Siegelbacken 17, 18 wirken bei ausgefahrener Trennvorrichtung 26 auch die äußeren Flächen des Siegelelements 25 mit denjenigen des Gegenhalters 24 im Sinne eines Siegelns der Folie 1 zusammen. Dadurch wird sichergestellt, dass eine Siegelung der Folie 1 bis an den Rand der Trennvorrichtung 29 erfolgen kann.

Um nun beim Versiegeln sicherzustellen, dass die zu verdrängende Schmelze nicht in den Bereich der Trennvorrichtung 26 fließt, ist eine geringe Winkeldifferenz 44 von Siegelelement 25 und Gegenhalter 24 vorgesehen. Die Winkeldifferenz 44 ist so ausgebildet, dass das Siegelelement 25 und Gegenhalter 24 im Bereich der Trennvorrichtung 29 mehr oder weniger geschlossen sind, während sich mit zunehmendem Abstand zu der Trennvorrichtung 26 ein zunehmender Spalt bildet. Die Geometrie ist so gewählt, um die Folienschmelze weg von der Trennvorrichtung 26 fließen zu lassen zur Reduzierung der Verschmutzung. Hierzu sind die Winkel 40, 42, mit denen die Siegelflächen von Siegelelement 25 bzw. Gegenhalter 24 gegenüber der Vertikalen bzw. der Transportrichtung 38 der Folie 1 geneigt sind, so ausgebildet, dass sich eine kleine Winkeldifferenz 44 bildet. Beispielsweise liegt die Winkeldifferenz im Bereich von 1-10° insbesondere bei 5°. Somit ist der Winkel 40 des Siegelelements 25 im Bereich von 34,5° - 39°, insbesondere bei 37° ausgebildet. Entsprechend liegt der Winkel 42 des Gegenhalters 24 im Bereich von 45,5° - 50°, insbesondere bei 48°.

Das Siegelbackenpaar 17, 18 besteht beispielsweise aus einem wärmeleitenden Metallbalken und den Heizelementen 20 bis 23, welche die Temperierung des wärmeleitenden Metallbalkens durchführen. Die Heizelemente 20 bis 23 sind an eine Temperatursteuerung angeschlossen. Die Trennvorrichtung 26 ist insbesondere als geschliffenes Messer ausgeführt. Das Siegelelement 25 sowie der Gegenhalter 24 werden durch Konvektion von den Siegelbacken 17, 18 erwärmt. Zur Optimierung des Wärmeübergangs zwischen Siegelbacken 17, 18 und Siegelelement 24 und/oder Gegenhalter 24 kann Wärmeleitpaste verwendet werden. Das beschriebene Siegelverfahren betrifft insbesondere eine übliche Heißsiegelung, bei der durch Wärmeeintrag die Folienlagen aufgeschmolzen werden und diese sich so miteinander verbinden.

Wie dargestellt sind die Siegelbacken 17, 18 innerhalb der Quersiegeleinheit 8 montiert und durch deren Antriebe 15, 16 horizontal sowie vertikal bewegt. Die horizontale Bewegung ist dabei aufgrund der kontinuierlichen Arbeitsweise der Maschine synchronisiert zur Folienabzugsgeschwindigkeit der Abzugselemente 6 bzw. mit einer Bewegung in Transportrichtung 38 überlagert.

Eine weitere Besonderheit der Bewegung der Quersiegeleinheit 8 ist eine kurzzeitige beschleunigte Bewegung in vertikaler Richtung bzw. in Transportrichtung 38, um Falten oder ähnliches aus der Quersiegelung zu entfernen. Diese Zusatzfunktion ergibt sich bei dem Zusammenwirken der vorzugsweise servo-getriebenen Längssiegeleinrichtung 7 mit der vorzugsweise servo-getriebenen Quersiegeleinheit 8. Durch den Längssiegelvorgang ist die Folie 1 zumindest während des Siegelvorgangs geklemmt. Nun kann die Quersiegeleinheit 8 in Transportrichtung 38 etwas schneller bewegt werden (beispielsweise einstellbar in einem Bereich zwischen 0 und 200% der Foliengeschwindigkeit) als die Foliengeschwindigkeit, die der Vorschubgeschwindigkeit der Längssiegeleinrichtung 7 entspricht. Dies hat zur Folge, dass die Folie 1 etwas gedehnt wird und somit sich keine Falten im Bereich der Quersiegeleinheit 8 bilden (sog. Strip-Funktion). Hierbei können die Backen der Quersiegeleinheit 8 zu Beginn der schnelleren Bewegung noch nicht ganz (erst zu beispielsweise 98%) geschlossen sein, um die im Beutel 9 befindliche Luft herauszustreichen. Anschließend erfolgt die Quersiegelung. Diese kurzzeitige beschleunigte Bewegung erhöht die Qualität der Quernähte und vereinfacht das Fertigen von Beuteln 9 ohne eine sogenannte Folienspaltung bzw. -spreizung (free skirt 36).

Die Folie 1 besteht in dem Bereich der Quersiegelnaht 33, 34 aus zwei Folienlagen 27, 28, die bereits durch den Formatsatz 5 zu einem Beutel 9 geformt wurden. Die Quersiegelbacken 17, 18 haben bereits in den Kontaktbereichen 31, 32 (vgl. Figur 4) die Folien 27, 28 gefügt. Ohne Siegelelement 25 und Gegenhalter 24 würde zwischen den Kontaktbereichen 31, 32 ein ungesiegelter Bereich 36 zurückbleiben, wie dies in der rechten Darstellung der Figur 5 angedeutet ist. Um dies zu vermeiden, ist der Gegenhalter 24 nun fest in der Siegelbacke 17 montiert. Das bewegliche Siegelelement 25 wiederum ist fest an der Trenneinrichtung 26 montiert und bewegt sich mit dieser auf den Gegenhalter 24 zu und kommt mit diesem in dem Bereich 29 (vgl. Fig. 4) in Kontakt. Dies ist der Bereich, der auch gesiegelt wird und die Naht verschließt.

Die Winkeldifferenz 44 in der Kontaktfläche zwischen Siegelelement 25 und Gegenhalter 24 ist notwendig, um der Folienschmelze eine Bewegungsrichtung hin zu dem Bereich 30 aufzuprägen, so dass eine Verschmutzung der Trenneinrichtung 26 stark vermindert wird. Die Siegelnähte mit der erfindungsgemäßen Vorrichtung gemäß den Figuren 3 und 4 zeigt nun die linke Darstellung der Figur 5, die sich durch fehlende Aufspreizung 36 auszeichnet. Der Bereich hin zum Beutel 35 wird durch die Siegelnähte 33, 34 verschlossen. Eine Schweißung mit Aufspreizung 36 nach dem Stand der Technik zeigt die rechte Darstellung der Figur 5.

Die erfindungsgemäße Vorrichtung eignet sich insbesondere für Schlauchbeutelmaschinen, vorzugsweise vertikale Schlauchbeutelmaschinen. Die Verwendung ist jedoch hierauf nicht eingeschränkt.

## Patentansprüche

1. Vorrichtung zum Versiegeln einer Verpackung oder eines Verpackungsmaterials (1), mit zumindest einer Siegeleinrichtung (8), die zumindest zwei zueinander verfahrbare Siegelbacken (17, 18) umfasst zum Versiegeln des Verpackungsmaterials (1), mit einer Trennvorrichtung (26) zum Trennen des Verpackungsmaterials (1), wobei die Trennvorrichtung (26) mit zumindest einer Siegelbacke (17, 18) verbunden ist, wobei die Trennvorrichtung (26) zumindest teilweise von einem weiteren Siegelelement (25) umgeben ist, das mit einem Gegenhalter (24) zur Siegelung des Verpackungsmaterials (1) zusammenwirkt, wobei eine Siegelfläche des Siegelelements (25) unmittelbar an die Trennvorrichtung (26) heranreicht, so dass sich kein oder nahezu kein Spalt zwischen Siegelelement (25) und Trennvorrichtung (26) ausbildet, **dadurch gekennzeichnet, dass** das Siegelelement (25) zusammen mit der Trennvorrichtung (26) relativ zu zumindest einer Siegelbacke (17, 18), mit der die Trennvorrichtung (26) verbunden ist, bewegbar angeordnet ist.

2. Vorrichtung nach Anspruch 1 **dadurch gekennzeichnet, dass** die Trennvorrichtung (26) von beiden Seiten durch das Siegelelement (25) umgeben ist.

3. Vorrichtung nach einem der vorhergehenden Ansprüche, **dadurch gekennzeichnet, dass** zumindest eine der Siegelbacken (17, 18) zumindest eine Ausnehmung aufweist, in der die Trennvorrichtung (26) und/oder das Siegelelement (25) angeordnet sind.

4. Vorrichtung nach einem der vorhergehenden Ansprüche, **dadurch gekennzeichnet, dass** zumindest eine Siegelfläche des Siegelelements (25) und/oder des Gegenhalters (24) schräg bzw. mit einem bestimmten Winkel (40, 42) bezogen auf das Verpackungsmaterial (1) bzw. eine Siegelfläche (31, 32) der Siegelbacken (17, 18), die sich zum Siegeln des Verpackungsmaterials (1) berühren, ausgebildet ist.

5. Vorrichtung nach einem der vorhergehenden Ansprüche, **dadurch gekennzeichnet, dass** zumindest eine Siegelfläche des Siegelements (25) hin zum Trennelement (26) ansteigt in einer Richtung quer zu einer Transportrichtung (38) des Verpackungsmaterials (1).

6. Vorrichtung nach einem der vorhergehenden Ansprüche, **dadurch gekennzeichnet, dass** die Winkel (40, 42) von Siegelelement (25) und Gegenhalter (24) unterschiedlich ausgebildet sind, so dass sich eine Winkeldifferenz (44) bildet.

7. Vorrichtung nach einem der vorhergehenden Ansprüche, **dadurch gekennzeichnet, dass** der Winkel (40) des Siegelelements (25) im Bereich von 34,5° - 39°, insbesondere bei 37° ausgebildet ist, und/oder dass der Winkel (42) des Gegenhalters (24) im Bereich von 45,5° - 50°, insbesondere bei 48° ausgebildet ist.

8. Vorrichtung nach einem der vorhergehenden Ansprüche, **dadurch gekennzeichnet, dass** die Winkeldifferenz (44) der Winkel (40, 42) von Siegelelement (25) und Gegenhalter (25) im Bereich von 1-10°, insbesondere bei 5° liegt.

9. Vorrichtung nach einem der vorhergehenden Ansprüche, **dadurch gekennzeichnet, dass** zusammenwirkende Siegelflächen von Siegelelement (25) und Gegenhalter (24) so ausgestaltet sind, dass mit zunehmendem Abstand von der Trennvorrichtung (26) sich der Abstand der Siegelflächen von Siegelelement (25) und Gegenhalter (24) vergrößert.

10. Vorrichtung nach einem der vorhergehenden Ansprüche, **dadurch gekennzeichnet, dass** zumindest ein Heizelement (20) bis (23) in der Siegelbacke (17, 18) angeordnet ist.

11. Vorrichtung nach einem der vorhergehenden Ansprüche, **dadurch gekennzeichnet, dass** das Siegelelement (25) in wärmeleitender Verbindung mit dem Heizelement (20) bis (23), vorzugsweise über Konvektion oder über Wärmeleitpaste thermisch in Verbindung steht.

12. Vorrichtung nach einem der vorhergehenden Ansprüche, **dadurch gekennzeichnet, dass** zumindest ein Antrieb (15, 16), vorzugsweise zwei Antriebe vorgesehen sind, der die Siegelbacken (17, 18) 5, 16) entlang und/oder quer zu einer Transportrichtung des zu verschweißenden Verpackungsmaterials (1) bewegt.

13. Vorrichtung nach einem der vorhergehenden Ansprüche, **dadurch gekennzeichnet, dass** die Siegeleinrichtung (8) Bestandteil einer vorzugsweise kontinuierlich arbeitenden Schlauchbeutelmaschine ist.

## Claims

1. Device for sealing a packaging or a packaging material (1),
with at least one sealing device (8) comprising at least two sealing jaws (17, 18) which are traversable relative to each other for a sealing of the packaging material (1),
with a separating device (26) for separating the packaging material (1), the separation device (26) being connected to at least one sealing jaw (17, 18), the separation device (26) being encompassed at least partially by a further sealing element (25), which acts together with a counterholder (24) for sealing the packaging material (1),
wherein a sealing surface of the sealing element (25) extends directly up to the separation device (26) such that no or nearly no gap is formed between the sealing element (25) and the separation device (26),
**characterised in that** the sealing element (25) is arranged so as to be movable together with the separation device (26) relative to at least one sealing jaw (17, 18) which the separation device (26) is connected to.

2. Device according to claim 1,
**characterised in that** the separation device (26) is encompassed by the sealing element (25) from both sides.

3. Device according to one of the preceding claims,
**characterised in that** at least one of the sealing jaws (17, 18) comprises at least one recess, which the separation device (26) and/or the sealing element (25) are/is arranged in.

4. Device according to one of the preceding claims,
**characterised in that** at least one sealing surface of the sealing element (25) and/or of the counterholder (24) is implemented to be inclined, respectively with a certain angle (40, 42) relative to the packaging material (1), respectively to a sealing surface (31, 32) of the sealing jaws (17, 18) contacting each other for sealing the packaging material (1).

5. Device according to one of the preceding claims,
**characterised in that** at least one sealing surface of the sealing element (25) ascends toward the separation element (26) in a direction transversely to a transport direction (38) of the packaging material (1).

6. Device according to one of the preceding claims,
**characterised in that** the angles (40, 42) of the sealing element (25) and the counterholder (24) are implemented differently, such that there is an angle difference (44).

7. Device according to one of the preceding claims,
**characterised in that** the angle (40) of the sealing element (25) is implemented in the range of 34.5° to 39°, in particular at 37°, and/or that the angle (42) of the counterholder (24) is in the range of 45.5° to 50°, in particular at 48°.

8. Device according to one of the preceding claims,
**characterised in that** the angle difference (44) of the angles (40, 42) of the sealing element (25) and the counterholder (24) is in the range of 1° to 10°, in particular at 5°.

9. Device according to one of the preceding claims,
**characterised in that** sealing surfaces of the sealing element (25) and the counterholder (24) which act together are implemented in such a way that the distance between the sealing surfaces of the sealing element (25) and the counterholder (24) increases with an increasing distance from the separation device (26).

10. Device according to one of the preceding claims,
**characterised in that** at least one heating element (20) to (23) is arranged in the sealing jaw (17, 18).

11. Device according to one of the preceding claims,
**characterised in that** the sealing element (25) is thermally connected with the heating element (20) to (23), preferably via convection or via a thermal paste, in a thermally conductive connection.

12. Device according to one of the preceding claims,
**characterised in that** at least one drive (15, 16), preferably two drives, is provided which moves the sealing jaws along and/or transversely to a transport direction of the packaging material (1) that is to be welded.

13. Device according to one of the preceding claims,
**characterised in that** the sealing device (8) is a component of a, preferably continually working, tubular bag machine.

## Revendications

1. Dispositif pour le scellage d'un emballage ou d'un matériau d'emballage (1), avec au moins un dispositif à scellage (8) comprenant au moins deux mâchoires de scellage (17, 18), qui sont traversables l'une par rapport à l'autre, pour le scellage du matériau d'emballage (1),
avec un dispositif de séparation (26) pour séparer le matériau d'emballage (1), le dispositif de séparation (26) étant lié avec au moins une mâchoire de scellage (17, 18), le dispositif de séparation (26) étant entouré au moins partiellement d'un élément de scellage de plus (25) qui agit conjointement avec une contre-pièce rétentrice (24) pour le scellage du matériau d'emballage (1),
où une surface-scellage de l'élément de scellage (25) s'étend jusqu'au dispositif de séparation (26) immédiatement, de sorte que nulle fente ou presque nulle fente se forme entre l'élément de scellage (25) et le dispositif de séparation (26),
**caractérisé en ce que** l'élément de scellage (25) est disposé d'une telle manière qu'il puisse être mu conjointement avec le dispositif de séparation (26) par rapport à au moins une mâchoire de scellage (17, 18), à laquelle le dispositif de séparation (26) est lié.

2. Dispositif selon la revendication 1,
**caractérisé en ce que** le dispositif de séparation (26) est entouré de l'élément de scellage (25) des deux côtés.

3. Dispositif selon l'une des revendications précédentes,
**caractérisé en ce qu'**au moins l'une des mâchoires de scellage (17, 18) comporte au moins un enfoncement, dans lequel le dispositif de séparation (26) et/ou l'élément de scellage (25) sont/est disposé/s.

4. Dispositif selon l'une des revendications précédentes,
**caractérisé en ce qu'**au moins une surface-scellage de l'élément de scellage (25) et/ou de la contre-pièce rétentrice (24) est implémentée à être inclinée, respectivement ayant un angle défini (40, 42) par rapport au matériau d'emballage (1) et/ou à une surface-scellage (31, 32) des mâchoires de scellage (17, 18) se contactant pour le scellage du matériau d'emballage (1).

5. Dispositif selon l'une des revendications précédentes,
**caractérisé en ce qu'**au moins une surface-scellage de l'élément de scellage (25) monte vers l'élément de séparation (26) en une direction transversalement à une direction de transport (38) du matériau d'emballage (1).

6. Dispositif selon l'une des revendications précédentes,
**caractérisé en ce que** les angles (40, 42) de l'élément de scellage (25) et de la contre-pièce rétentrice (24) sont réalisés différemment, de sorte que se forme une différence angulaire (44).

7. Dispositif selon l'une des revendications précédentes,
**caractérisé en ce que** l'angle (40) de l'élément de scellage (25) est réalisé dans la gamme de 34,5° - 39°, en particulier à 37°, et/ou que l'angle (42) de la contre-pièce rétentrice (24) est réalisé dans la gamme de 45,5° - 50°, en particulier à 48°.

8. Dispositif selon l'une des revendications précédentes,
**caractérisé en ce que** la différence angulaire (44) des angles (40, 42) de l'élément de scellage (25) et de la contre-pièce rétentrice (24) est dans la gamme de 1 - 10°, étant en particulier 5°.

9. Dispositif selon l'une des revendications précédentes,
**caractérisé en ce que** des surfaces-scellages agissant conjointement de l'élément de scellage (25) et de la contre-pièce rétentrice (24) sont implémentées d'une telle manière que la distance entres les surfaces-scellages de l'élément de scellage (25) et de la contre-pièce rétentrice (24) croisse si leur distance du dispositif de séparation (26) s'augmente.

10. Dispositif selon l'une des revendications précédentes,
**caractérisé en ce qu'**au moins un élément de chauffage (20) à (23) est agencé dans la mâchoire de scellage (17, 18).

11. Dispositif selon l'une des revendications précédentes,
**caractérisé en ce que** l'élément de scellage (25) est en connexion thermo-conductrice avec l'élément de chauffage (20) à (23), étant préférablement lié thermiquement par convection ou par une pâte thermique.

12. Dispositif selon l'une des revendications précédentes,
**caractérisé en ce qu'**au moins un entraînement (15, 16), préférablement deux entraînements, est prévu, mouvant les mâchoires de scellage le long de et/ou transversalement à une direction de transport du matériau d'emballage (1) destiné à être soudé.

13. Dispositif selon l'une des revendications précédentes,
**caractérisé en ce que** le dispositif à scellage (8) est un composant d'une machine ensacheuse qui opère préférablement continûment.
